# EUROPEAN PATENT SPECIFICATION

(11) **EP 3 161 186 B1**
(45) Date of publication and mention of the grant of the patent: **04.07.2018**
(21) Application number: 14772267.2
(22) Date of filing: 15.08.2014
(51) Int. Cl.: C25B 15/02, C25B 15/08, C25B 15/04, C25B 9/00, C25B 1/04, C25B 13/04, C25B 1/10, C25B 9/18, F02M 25/12, G05D 23/19, G05B 15/02

(54) **OXYHYDROGEN GENERATOR AND METHOD FOR PRODUCING OXYHYDROGEN GAS**
KNALLGASERZEUGER UND VERFAHREN ZUR HERSTELLUNG VON KNALLGAS
GÉNÉRATEUR D'OXYHYDROGÈNE ET PROCÉDÉ POUR LA PRODUCTION DE GAZ DÉTONNANT

(30) Priority: 27.06.2014 BG 11178214
(43) Date of publication of application: 03.05.2017
(73) Proprietor: Hydrogenica Corporation Ltd., 1616 Sofia (BG)
(72) Inventor: BOZHILOV, Angel Ivanov, 1616 Sofia (BG); TABAKOV, Boyan Mirchev, 1463 Sofia (BG)
(86) International application number: PCT/BG2014/000030
(87) International publication number: WO 2015/196263

(56) References cited:
- WO-A1-2007/133174
- DE-A1-102011 107 383
- TR-U- 201 205 792
- US-A1- 2010 276 279
- US-A1- 2011 203 917
- US-A1- 2013 220 240

## Description

### Technical Field

The present invention relates to an oxyhydrogen generator and a method for producing oxyhydrogen gas used to increase the efficiency of internal combustion engines, and in particular, engines using gasoline, diesel and natural gas, as well as of stationary combustion facilities.

### Background Art

It is known that at the combustion of hydrocarbon fuels in internal combustion engines exhaust gases contain harmful emissions such as carbon monoxide, unburned hydrocarbons, nitrogen oxides, sulfur oxides, and carbon black. The efforts are aimed at more complete combustion, resulting in reduced harmful emissions and fuel consumption that result in increased efficiency of the internal combustion engines.

One of the solutions to the above problem is to use the oxyhydrogen generators where via electrolysis of water, hydrogen and oxygen are produced, and the resulting oxyhydrogen gas (HHO gas) is added to the fuel of the internal combustion engines. Further addition of hydrogen and oxygen leads to more complete combustion of the hydrocarbon-based fuel, resulting in reduced harmful emissions and increased efficiency of the internal combustion engines.

Known are a variety of patent publications that describe oxyhydrogen generators. For example, BG 1515 U1 discloses an oxyhydrogen generator which comprises an electrolyser, involving at least three cells, each of which consists of a chamber where the electrodes are located and are connected to a source of direct electric current, a metal screen being mounted between the electrodes. In each cell an inlet is formed for charging the electrolyte and an outlet for discharging of the resultant oxyhydrogen gas, the cells being connected to each other via spillways.

This known generator does not provide control and stabilization of the voltage in the cells.

WO 2007/133174 A1 discloses a system for generating variable output of hydrogen and oxygen by electrolysis of water for supplementing a hydrocarbon fuel in an internal combustion engine, the system comprising: a plurality of electrolytic reactors in a electrolyte communication, each reactor comprising: (i) a sealed cathode chamber partially filled with an electrolyte solution; and (ii) an anode at least partially immersed in the solution and electrically isolated from the chamber; a reservoir in electrolyte communication with at least one of the reactors; level control means for maintaining solution level in the reactors; conduit for directing oxygen and hydrogen product from the reactors to the engine; a cooling system for transferring heat from the reactors; and a source of electric potential for energizing one or more of the reactors in response to engine demand.

The system described in WO 2007/133174 A1, does not provide for elimination of parasitic currents, flowing between the electrodes of the electrolytic cells. During the process of electrolysis, the electrolyte temperature is increased since the operational surface, covered by the cathodes and anodes, is small against the fed current flow which leads to greater power consumption. Moreover, this known generator does not provide for control and stabilization of the voltage in the individual cells, resulting in reduction of the amount of the resulting oxyhydrogen gas. These deficiencies reduce the efficiency of the generator.

### Disclosure of Invention

An object of the present invention is to provide an oxyhydrogen generator and a method for producing oxyhydrogen gas, whereby to avoid the occurrence of parasitic currents between the electrodes in the electrolytic cells.

Another object of the present invention is to provide control and stabilization of the voltage in the cells along with the production of larger amounts of oxyhydrogen gas.

An oxyhydrogen generator according to the present invention comprises an electrolyser consisting of a plurality of electrolytic cells covered by a hermetically sealed housing. Each cell consists of a chamber, forming an electrolytic bath where a plurality of alternating anodes and cathodes are housed, between which a metal screen is mounted alongside the electrodes. The electrodes in the cells are connected in series with a source of direct current. The electrolyte baths of the chambers are interconnected through spillways from insulating material, arranged horizontally above the level of the cathodes and anodes in the chambers. In the upper part of the housing formed are an opening for charging the electrolyte, connected with an electrolyte reservoir, and at least one outlet for discharging of the resultant oxyhydrogen gas from the cells. The oxyhydrogen generator is equipped with sensors for monitoring the electrolyte level in the cells and a sensor for monitoring the electrolyte temperature. Provided is also a cooling system to remove heat from the cells. The oxyhydrogen generator has a microprocessor module for the control and management of the electrolyte level in the chambers, the stability of the voltage, the electrolyte temperature, the commutation of the electrolytic cells, the supply of electrolyte from the reservoir to the chambers, the amount of the produced oxyhydrogen gas, the regulation of the supply of the gas to an engine or to a combustion chamber, and an automatic stopping down the oxyhydrogen generator in excess of the preset parameters.

The metal screen is a rectangular metal plate whereat in the upper and the lower ends are formed openings to let pass the resultant oxyhydrogen gas and respectively, pass the electrolyte through the metal screen.

In one embodiment of the present invention, operational surface of the electrodes is 8 cm² to 12 cm².

In another embodiment of the present invention, the outlet for discharging the resultant oxyhydrogen gas from the cells has a diameter of 2 to 3 mm.

The objective of the present invention is achieved also by applying a method for producing oxyhydrogen gas by means of electrochemical decomposition of water in a oxyhydrogen generator, which comprises an electrolyser including a plurality of electrolytic cells, cach cell consisting of a chamber, forming an electrolytic bath where housed are a plurality of alternating anodes and cathodes between which a metal screen is mounted; the electrolyte baths of the cells are filled with electrolyte and connected to each other by spillways so as to form a common electrolytic bath having the same level in all cells; the electrodes of the cells are connected in series with a source of direct current; the oxyhydrogen generator has a microprocessor module; the method comprising:
carrying out the electrochemical decomposing of water at a current density of 45 mA/cm² to 55 mA/cm²;
drawing the resulting gaseous mixture of oxygen and hydrogen through at least one outlet, formed in the upper part of the electrolyser;
cooling the cells during electrolysing process;
performing the following operations by means of the microprocessor module:
   (a) starting the oxyhydrogen generator upon reaching a preset voltage value;
   (b) controlling the voltage in the cells and stabilizing the voltage by changing the frequency duty cycle of the voltage, supplied to the cells;
   (c) disconnecting the operation of the oxyhydrogen generator when the voltage drops down;
   (d) controlling the current flow in the system, and on reaching a preset value discontinuing supplying voltage to cells; automatically adjusting the current across the system, the stabilization performed by pulse and width modulation of the voltage supplied to one of the cells and by continuous monitoring of the current flow across the system;
   (e) generating an alarm signal for increasing the current flow across the cells over a preset value;
   (f) controlling the temperature of the electrolyte in the cells by sensors and upon reaching a preset value, discontinuing the power supply to the cells; generating an alarm signal for high temperature;
   (g) controlling and managing the commutation of the electrolytic cells;
   (h) controlling the electrolyte level by sensors and upon reaching the preset minimum level discontinuing the power supply to the cells; generating an alarm signal for low level;
   (i) controlling the electrolyte charge to supplement the electrolytic baths upon reaching a preset level;
   (j) controlling the amount of the produced oxyhydrogen gas, and the regulation of the supply of the oxyhydrogen gas to an engine or to a combustion chamber;
   (k) reading the operation hours of the oxyhydrogen generator, storing this value in a nonvolatile memory and upon reaching a preset value emitting a signal for electrolyte replacement.

The advantages of the oxyhydrogen generator and the method for producing oxyhydrogen gas according to the present invention are the following: The use of a metal screen in each of the cells prevents from flowing of parasitic currents between the electrodes, which allows the use of a plurality of cells and a plurality of electrodes in each cell and increases the power supply, without the risk of raising the temperature of the electrolyte. The electrodes operational surface is larger against the supplied power, which on one hand leads to lower power consumption, and on the other hand - to an increase in the quantity of the produced oxyhydrogen gas. The control and stabilization of voltage and power in single cells employs the oxyhydrogen generator's optimal effective mode without affecting and detaining the board supply of the internal combustion engines. The result is an increased efficiency of the oxyhydrogen generator according to the invention compared to the known generators.

### Brief Description of Drawings

Fig. 1 is a schematic illustration of the oxyhydrogen generator according to the invention in a front view.
Fig. 2 is a schematic illustration of 12 electrolytic cells of the oxyhydrogen generator in a top view.

### Modes for Carrying Out the Invention

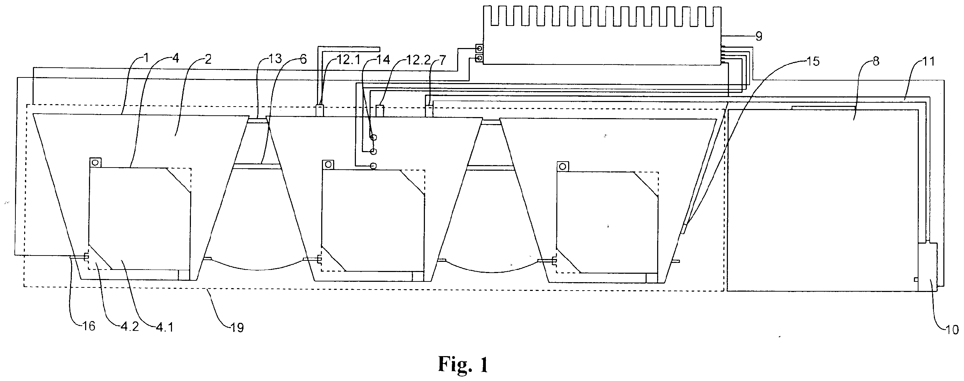

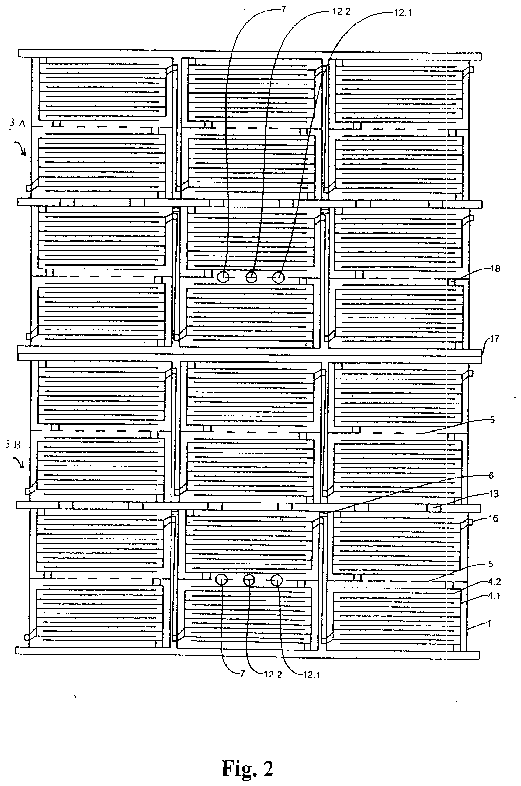

The oxyhydrogen generator, shown schematically in Fig. 1 and Fig. 2 is an electrolyser consisting of twelve cells 1, grouped into two modules, 3.A and 3.B between which an insulation panel 17 is placed. Each of the 3.A and 3.B modules consists of six cells 1, arranged in one behind the other rows - three cells in each row. All cells 1 are covered tightly by a hermetically sealed housing (not shown on the figures). Each cell 1 comprises of a chamber 2, forming an electrolytic bath where thirteen electrodes 4 are housed - seven anodes 4.2 and six cathodes 4.1, a metal screen 5 of stainless steel being mounted between the electrodes 4. Electrodes 4 of cells 1 are plates made of stainless steel or nickel or nickel alloy, and each electrode has operational surface of 10 cm². The electrodes 4 are connected
in series to a DC source with a 12 V power supply trough supply points 16 and 18. The electrolytic bath of each chamber 2 is connected to the electrolytic baths of the adjacent chambers through spillways 6, made of insulating material, arranged horizontally above the level of the cathodes and anodes in chambers 2. In the insulating panel 17 spillways (not shown in the figures) are also designed to connect the cells 1 of modules 3.A and 3.B. In the upper wall of the hermetically sealed housing, an inlet 7 is formed for charging cells with electrolyte and the inlet 7 is connected to reservoir 8 via pump 10 and pipe 11. Provided are flexible tubular elements 13 made of insulating material for passing on the resultant oxyhydrogen gas from one chamber to another, outlets 12.2 and a common outlet 12.1 for the discharge from cells of the resultant oxyhydrogen gas. The oxyhydrogen generator is equipped with fans (not shown) to remove heat from cells 1, placed under the oxyhydrogen generator's body, as well as with sensors 14 for reading the electrolyte level, and sensor 15 to monitor the temperature of the electrolyte. The cells are housed in box 19, made of insulating material.

In another embodiment (not shown in the figures) the oxyhydrogen generator according to the invention that is intended for heavy duty trucks with a 26.7 V supply battery, is composed of 24 cells, and the total number of electrodes is 312.

The oxyhydrogen generator has a microprocessor module 9 for controlling and managing the electrolyte level in the chambers 2, the stability of the voltage and current intensity, the electrolyte temperature, the commutation of the electrolytic cells 1, the pump for supplying the electrolyte from the reservoir 8 to the chamber, the amount of the generated oxyhydrogen gas and the regulation of the power supply to the engine or the combustion chamber with it, and the automatic discontinuance of the generator's operation in excess of the preset parameters.

In this embodiment, the microprocessor module 9 is a digitally controlled PWM generator with two independent exits, supplying power to both modules 3.A and 3.B, and is equipped with four line alphanumeric LCD display.

The oxyhydrogen generator operates as follows. Before starting-up, the generator's cells 1 are filled with electrolyte to a determined level. The electrolyte comprises water, containing 2-10% potassium hydroxide (KOH). The electrolysis is carried out at a supply voltage of 12.8 V or 26.7 V, depending on the supply battery of the internal combustion engine and at current intensity of 55 A. As a result of water decomposition on cathode 4.1, released is oxygen, and on anodes 4.2 - hydrogen. These gases pass into the space above the electrolyte and the resultant oxyhydrogen gas mixture (HHO gas) is drawn through outlet 12.1 and mixed with the intake air, supplied to the internal combustion engine. The size of the exit outlet 12.1 is less than 3 mm in order to prevent from the flow of parasitic currents there through.

Besides the operation of the PWM signal, the microprocessor module 9 performs the following software set functions:
- Controlling the voltage and starting the operation of the oxyhydrogen generator upon reaching a preset value (12.8 V or 26.7 V, depending on the internal combustion engine battery). This start-up is performed with a delay which can be set in the range between 1 sec. and 5 min. The stabilization of the voltage is performed by alternation of the frequency duty cycle of the voltage, supplied to the cells.
- Discontinuing the operation of the oxyhydrogen generator when the voltage drops below a preset value (12.6 V or 26.4 V). Between the two values a difference is introduced (hysteresis), providing stable operation and the possibility of values alternation.
- Controlling the current flow in the system, and upon reaching a preset value (80 A) discontinuing the power supply to cells 1; generating an alarm signal for the increase of the current, flowing through cells 1; measuring the current flowing through cells 1 and calculating the average power, consumed by the system. This information is displayed permanently. Automatically regulating and stabilizing the current flow in the system, the stabilization being performed by width and pulse modulation of the voltage supplied to one of the cells and by continuous monitoring of the current throughout the system. The accuracy of stabilization is below 5%; the maximum stabilized current is of 80 A; generating an alarm signal for increasing the current flow across the cells over a preset value;

- Controlling the temperature of the electrolyte in cells 1 via sensor 15 and discontinuing the power supply to the cells upon reaching a preset value (55°C); generates an alarm signal for high temperature;
- Controlling the electrolyte level by sensors 14 and discontinuing the power supply to cells 1 upon reaching the preset minimum level; generating an alarm signal for low level.
- Running pump 10 to supplement cells 1 with electrolyte on reaching the preset level. Shutting off pump 10 upon reaching maximum level; Both levels are determined by the position of sensors 14, immersed in the electrolyte.
- Reading the hours of the generator's operation and storing this value in a nonvolatile memory. This information can be read only in a service mode. A message on the electrolyte replacement is displayed upon reaching a preset value. This message is removed only in a service mode.
- Database as a function of time, saved in a nonvolatile memory, stores the following information: date and time of the reading; voltage, supplied to the system; current flows through the cells; electrolyte temperature.
- The momentary operational modes, measured values, alarm events and other parameters are visualized on the display.

The employment of a plurality of cells and a plurality of electrodes in each of the cells allows the oxyhydrogen generator to operate at a higher voltage, at the same time preventing the flow of parasitic currents between the electrodes. This leads to an increase in the quantity of the resulting oxyhydrogen gas and increases the efficiency of the oxyhydrogen generator.

Adding oxyhydrogen gas to the fuel, used in the internal combustion engines, results in more complete combustion of the fuel, significantly reducing the amount of harmful emissions and improving the efficiency of engines fueled with petrol, diesel or natural gas.

The oxyhydrogen generator according to the invention can be applied in various combustion facilities used in the industry.

The above embodiments does not limit the present invention. Those skilled in the art will appreciate that there may be other embodiments of the oxyhydrogen generator and the method for obtaining of oxyhydrogen gas according to the invention which are within the scope of the claims.

## Claims

1. An oxyhydrogen generator, **characterized in that** said generator comprises an electrolyser consisting of a plurality of electrolytic cells (1), covered by a hermetically sealed housing, each cell (1) comprising a chamber (2), forming an electrolytic bath where a plurality of alternating anodes (4.2) and cathodes (4.1) are housed, a metal screen (5) being mounted between and alongside the electrodes (4), wherein the electrodes (4) in cells (1) being connected in series with a source of direct current, and the electrolytic baths of chambers (2) being interconnected through spillways (6) from insulating material, arranged horizontally above the level of the cathodes (4.1) and the anodes (4.2); in the upper part of the housing are formed an opening (7) for charging cells (1) with electrolyte connected with an electrolyte reservoir (8) and at least one outlet (12.1) for discharging of the resultant oxyhydrogen gas from the cells (1); the oxyhydrogen generator is equipped with sensors for monitoring the electrolyte level in the cells and a sensor for monitoring the electrolyte temperature, as is provided and cooling system to remove heat from the cells (1), and the oxyhydrogen generator has a microprocessor module (9) for controlling and managing the electrolyte level in the chambers, the stability of the voltage, the electrolyte temperature, the commutation of the electrolytic cells, the supply of electrolyte from the reservoir to the chambers, the amount of the produced oxyhydrogen gas and the regulation of supply of the oxyhydrogen gas to an engine or an combustion chamber, as well the automatic stopping down of the generator's operation in excess of the preset parameters.

2. An oxyhydrogen generator according to claim 1, **characterized in that** the metal screen (5) is a rectangular metal plate whereat in the upper and the lower ends are formed openings to let pass the resultant oxyhydrogen and respectively the electrolyte through the metal screen.

3. An oxyhydrogen generator according to claim 1, **characterized in that** the operational surface of the electrodes (4) is 8 cm² to 12 cm².

4. An oxyhydrogen generator according to claim 1, **characterized in that** the outlet for discharging the resultant oxyhydrogen gas from cells (1) has a diameter of 2 mm to 3 mm.

5. A method for producing oxyhydrogen gas by means of electrochemical decomposition of water, **characterized in that** the electrochemical decomposition of water is performed in an oxyhydrogen generator, which comprises an electrolyser including a plurality of electrolytic cells, each cell (1) consisting of a chamber (2), forming an electrolytic bath where housed are a plurality of alternating anodes (4.2) and cathodes (4.1) between which a metal screen (5) is mounted, whereat the electrolyte baths of the cells (1) are filled with electrolyte and connected to each other by spillways (6) so as to form a common electrolytic bath having the same level in all cells (1), the electrodes (4) of the cells (1) being connected in series with a source of direct current, and a microprocessor module (9) is installed to the oxyhydrogen generator, the method comprising:
carrying out the electrochemical decomposition of water at a current density of 45 mA/cm² to 55 mA/cm²,
drawing the resulting gaseous mixture of oxygen and hydrogen through at least one outlet (12.1) formed in the upper part of the electrolyser,
cooling the cells during electrolysing process,
performing the following operations by means of the microprocessor module (9):
(a) starting the oxyhydrogen generator upon reaching a preset voltage value;
(b) controlling the voltage in the cells (1) and stabilizing the voltage by changing the frequency duty cycle of the voltage supplied to the cells;
(c) discontinuing the operation of the oxyhydrogen generator when the voltage drops down;
(d) controlling the current flow in the system, and on reaching a preset value discontinuing supplying voltage to cells; automatically adjusting the current across the system, the stabilization performed by pulse and width modulation of the voltage supplied to one of the cells and by continuous monitoring of the current flow across the system;
(e) generating an alarm signal for increasing the current flow across the cells over a preset value;
(f) controlling the temperature of the electrolyte in the cells by sensors and upon reaching a preset value, discontinuing the power supply to the cells; generating an alarm signal for high temperature;
(g) controlling and managing the commutation of the electrolytic cells;
(h) controlling the electrolyte level by sensors and upon reaching the preset minimum level discontinuing the power supply to the cells; generating an alarm signal for low level;
(i) controlling the electrolyte charge to supplement the electrolytic baths upon reaching a preset level;
(j) controlling the amount of the produced oxyhydrogen gas and regulating the supply of the oxyhydrogen gas to an engine or to a combustion chamber;
(k) reading the operation hours of the oxyhydrogen generator, storing this value in a nonvolatile memory and upon reaching a preset value emitting a signal for electrolyte replacement.

## Patentansprüche

1. Knallgasgenerator, **dadurch gekennzeichnet, dass** der Generator aus einem Elektrolyseur besteht, der eine Vielzahl von Elektrolysezellen (1) aufweist, die in einem hermetisch abgedichteten Gehäuse eingeschlossen sind, wobei jede Zelle (1) aus einer Kammer (2) besteht, die ein elektrolytisches Bad bildet, in dem eine Vielzahl von alternierenden Anoden (4.2) und Kathoden (4,1) untergebracht sind, zwischen denen parallel zu den Elektroden (4) eine Metallabschirmung (5) eingebaut ist, wobei die Elektroden (4) in den Zellen (1) aufeinanderfolgend mit einer Gleichstromquelle verbunden sind, und die elektrolytischen Bäder der Kammern (2) durch Überläufe (6) aus Isolierstoff miteinander verbunden und horizontal oberhalb der Kathoden (4.1) und der Anoden (4.2) angeordnet sind; im oberen Teil des Gehäuses sind Öffnungen (7) zur Beaufschlagung der Zellen (1) mit einem Elektrolyten, verbunden mit Reservoir (8) für die Elektrolyten und mindestens ein Auslass (12.1) zur Ableitung des resultierenden Knallgases aus den Zellen (1) ausgebildet; der Knallgasgenerator ist mit Sensoren zur Überwachung des Elektrolytpegels und einem Temperaturmeßsensor für den Elektrolyt ausgestattet, wobei ein Kühlsystem vorgesehen ist, um die Wärme von den Zellen (1) abzuleiten, ferner weist der Knallgasgenerator eine Mikroprozessor-Modul (9) zur Überwachung und -steuerung des Elektrolytpegels in den Kammern, der Spannungsstabilität, der Elektrolyttemperatur, der Kommutierung der Elektrolysezellen, der Zuführung des Elektrolyten aus dem Reservoir zu den Kammern, der erzeugten Knallgasmenge und eine Regelung der Beaufschlagung der Kraftmaschine oder der Brennkammer mit Knallgas und eine automatische Sperrung des Generatorbetriebs bei Übersteigerung der voreingestellten Parameter auf.

2. Knallgasgenerator nach Anspruch 1, **dadurch gekennzeichnet, daß** die Metallabschirmung (5) eine rechteckige Metallplatte ist, an deren oberem und unterem Ende Öffnungen für den Durchlauf des jeweils erhaltenen Knallgases sowie des Elektrolyts durch die Abschirmung ausgebildet sind.

3. Knallgasgenerator nach Anspruch 1, **dadurch gekennzeichnet, daß** die Betriebsfläche des Elektroden (4) 8 bis 12 cm² beträgt.

4. Knallgasgenerator nach Anspruch 1, **dadurch gekennzeichnet, dass** der Auslass zur Entfernung des hergestellten Knallgases aus den Zellen (1) einen Durchmesser von 2 bis 3 mm aufweist.

5. Verfahren zur Herstellung von Knallgas durch elektrochemische Zersetzung von Wasser, **dadurch gekennzeichnet, dass** die elektrochemische Zersetzung von Wasser in einem Knallgasgenerator erfolgt, der aus einem Elektrolyseur besteht, der eine Vielzahl von Elektrolysezellen (1) aufweist, wobei jede Zelle (1) aus einer Kammer (2) besteht, die ein elektrolytisches Bad bildet, in dem eine Vielzahl von alternierenden Anoden (4.2) und Kathoden (4,1) untergebracht sind, zwischen denen eine Metallabschirmung (5) eingebaut ist, wobei die elektrolytischen Bäder der Zellen (1) mit einem Elektrolyt abgefüllt und durch Überläufe (6) miteinander verbunden sind, so dass ein gemeinsames Elektrolytbad gebildet wird, das in allen Zellen (1) das gleiche Niveau aufweist, und die Elektroden (4) der Zellen (1) aufeinanderfolgend mit einer Gleichstromquelle verbunden sind, und am Knallgasgenerator eine Mikroprozessor-Modul (9) eingebaut ist; das Verfahren umfasst:
Durchführen der elektrochemische Zersetzung von Wasser bei einer Stromdichte von 45 mA/cm² bis 55 mA/cm²,
Entfernen des resultierenden Gasgemisches aus Sauerstoff und Wasserstoff durch mindestens einen Auslass (12.1), der im Oberseite des Elektrolyseurs ausgebildet ist,
Abkühlen der Zellen während des elektrolytischen Prozesses,
Ausführen folgenden Operationen durch die Mikroprozessor-Modul (9):
(a) Starten des Knallgasgenerator-Betriebes nach Erreichen eines voreingestellten Spannungswertes;
(b) Spannungskontrolle in den Zellen (1) und Spannungsstabilisierung durch Änderung des Füllkoeffizienten der Spannungsfrequenz, die den Zellen zugeführt wird;
(c) Unterbrechung des Knallgasgenerator-Betriebes bei Spannungsabfall;
(d) Kontrolle des durch das System durchlaufenden Stroms und Unterbrechung der Spannungszuführung zu den Zellen nach Erreichen eines vorbestimmten Wertes, automatische Stromregelung durch das System, wobei die Stabilisierung durch Pulslängenmodulation der Spannung erfolgt, die einer der Zellen zugeführt wird, und durch ständige Überwachung des durch das System fließenden Stroms;
(e) Generieren eines Alarmsignals bei Stromüberhöhung über einen voreingestellten Wert in den Zellen hinaus;
(f) Temperaturüberwachung des Elektrolyts in den Zellen mittels Sensoren und Unterbrechung der Spannungszuführung zu den Zellen nach Erreichen eines vorgegebenen Wertes; Erzeugen aines Alarmsignals bei Temperaturüberhöhung;
(g) Steuerung und Überwachung der Elektrolytzellen-Kommutierung;
(h) Elektrolytpegelkontrolle durch Sensoren und Unterbrechung der Spannungszuführung zu den Zellen (1) nach Erreichen eines vorbestimmten minimalen Pegels; Generieren eines Alarmsignals fur einen niedrigen Pegel;
(i) Elektrolytzufuhrsteuerung, um die Elektrolytbäder auf ein vorbestimmtes Niveau zu ergänzen;
(j) Mengenkontrolle an erzeugtem Knallgas und Knallgaszufuhrsteuerung zum Motor oder zur Verbrennungskammer;
(k) Ablesung der Knallgasgenerator-Betriebsstunden, Eingabe dieser Werte in einen energieunabhängigen Speicher und Signalabgabe zum Austausch des Elektrolyts nach Erreichen eines vorgegebenen Wertes.

## Revendications

1. Générateur d'oxyhydrogène, **caractérisé par le fait que** le générateur comprend un électrolyseur constitué d'une pluralité de cellules électrolytiques (1) recouvertes d'un boîtier hermétiquement fermé, chaque cellule (1) comprend une chambre (2), contenant un bain électrolytique où une pluralité d'anodes (4.2) et de cathodes (4.1) alternées sont logées, un écran métallique (5) étant monté parallèlement entre les électrodes (4), les électrodes (4) dans les cellules (1) sont connectées en série à une source de courant continu et les bains électrolytiques des chambres (2) sont raccordés entre eux par l'intermédiaire de déversoirs (6) de matériau d'isolement, disposés horizontalement au-dessus du niveau des cathodes (4.1) et des anodes (4.2); dans l'extrémité supérieure du boîtier sont formées une ouverture (7) pour le chargement d'électrolyte dans les cellules (1), l'ouverture étant raccordée au réservoir (8) à électrolyte, et au moins une ouverture (12.1) pour l'évacuation du gaz oxhydrique ainsi obtenu hors des cellules (1) ; le générateur d'oxyhydrogène est équipé de capteurs pour surveiller le niveau de l'électrolyte dans les cellules et d'un capteur pour surveiller la température de l'électrolyte, comme cela est prévu, et d'un système de refroidissement pour évacuer la chaleur des cellules (1) et le générateur d'oxyhydrogène a un module à microprocesseur (9) pour le contrôle et la gestion du niveau de l'électrolyte dans les chambres, de la stabilité de la tension, la température de l'électrolyte, la commutation des cellules électrolytiques, l'alimentation en électrolyte du réservoir vers les chambres, la quantité de gaz oxhydrique produite et la régulation de l'alimentation en gaz oxhydrique du moteur ou de la chambre de combustion, ainsi que l'arrêt automatique du fonctionnement du générateur au-delà des paramètres prédéfinis.

2. Générateur d'oxyhydrogène selon la revendication 1, **caractérisé par le fait que** l'écran métallique (5) est une plaque métallique rectangulaire dans laquelle aux extrémités supérieure et inférieure, il y a des ouvertures pour le passage de l'oxyhydrogène obtenu et le passage de l'électrolyte à travers l'écran métallique.

3. Générateur d'oxyhydrogène selon la revendication 1, **caractérisé par le fait que** la surface de fonctionnement des électrodes (4) est comprise entre 8 cm² et 12 cm².

4. Générateur d'oxyhydrogène selon la revendication 1, **caractérisé par le fait que** l'ouverture pour évacuer le gaz oxhydrique obtenu des cellules (1) a un diamètre de 2 mm à 3 mm.

5. Procédé de production de gaz oxhydrique au moyen de la décomposition électrochimique de l'eau, **caractérisé par le fait que** la décomposition électrochimique de l'eau est réalisée dans un générateur d'oxyhydrogène comprenant un électrolyseur, lui-même comprenant une pluralité de cellules électrolytiques (1), chaque cellule (1) étant composée d'une chambre (2), formant un bain électrolytique où sont logées une pluralité d'anodes (4.2) et de cathodes (4.1) alternées entre lesquelles est monté un écran métallique (5); les bains électrolytiques des cellules (1) sont remplis d'électrolyte et reliés les uns aux autres par des déversoirs (6), de façon à former un bain électrolytique commun ayant le même niveau dans toutes les cellules (1), les électrodes (4) des cellules (1) sont connectées en série à une source de courant continu, et un module à microprocesseur (9) est installé sur le générateur d'oxyhydrogène, le procédé comprenant:
la décomposition électrochimique de l'eau à une densité de courant de 45 mA/cm² à 55 mA/cm²,
l'évacuation du mélange gazeux d'oxygène et d'hydrogène ainsi obtenu par au moins une ouverture (12.1) formée dans la partie supérieure de l'électrolyseur,
le refroidissement des cellules pendant le processus d'électrolyse,
la réalisation des opérations suivantes au moyen du module à microprocesseur (9):
(a) la mise en marche du générateur d'oxyhydrogène après avoir atteint une valeur de tension prédéfinie,
(b) le contrôle de la tension dans les cellules (1) et la stabilisation de la tension en changeant la fréquence de la tension fournie aux cellules,
(c) l'interruption du fonctionnement du générateur d'oxyhydrogène en cas de baisse de la tension,
(d) le contrôle du flux de courant dans le système et lorsque la valeur prédéfinie est atteinte, l'interruption de l'alimentation des cellules en tension ; le réglage automatique du courant à travers le système, la stabilisation étant effectuée par la modulation de largeur d'impulsion de la tension fournie à l'une des cellules et par la surveillance continue du courant circulant dans le système,
(e) la génération d'un signal d'alarme pour augmenter le flux de courant à travers les cellules au-dessus d'une valeur prédéfinie,
(f) le contrôle de la température de l'électrolyte dans les cellules au moyen de capteurs et lorsque la une valeur prédéfinie est atteinte, l'interruption de l'alimentation des cellules en énergie; la génération d'un signal d'alarme pour haute température,
(g) le contrôle et la gestion de la commutation des cellules électrolytiques,
(h) le contrôle du niveau d'électrolyte par des capteurs et, lorsque le niveau minimum préréglé est atteint, l'interruption de l'alimentation des cellules en tension; la génération d'un signal d'alarme pour un niveau bas,
(i) le contrôle du niveau de l'électrolyte pour compléter les bains électrolytiques jusqu'à l'atteinte du niveau prédéfini,
(j) le contrôle de la quantité de gaz oxhydrique produit et la régulation de l'alimentation du moteur ou de la chambre de combustion en gaz oxhydrique,
(k) le signalement des heures de fonctionnement du générateur d'oxygène, la saisie des données dans une mémoire non volatile et, après avoir atteint la valeur prédéfinie, envoyer un signal de remplacement d'électrolyte.
